# EUROPÄISCHE PATENTSCHRIFT

(11) **EP 1 342 702 B1**
(45) Veröffentlichungstag und Bekanntmachung des Hinweises auf die Patenterteilung: **30.07.2008**
(21) Anmeldenummer: 03004106.5
(22) Anmeldetag: 26.02.2003
(51) Int. Cl.: C03C 17/25

(54) **Glaskörper mit poröser Beschichtung**
Glass body with a porous coating
Article en verre avec une couche poreuse

(30) Priorität: 06.03.2002 DE 10209949
(43) Veröffentlichungstag der Anmeldung: 10.09.2003
(73) Patentinhaber: Schott AG, 55122 Mainz (DE)
(72) Erfinder: Krzyzak, Marta, 38678 Clausthal-Zellerfeld (DE); Helsch, Gundula, Dr., 38678 Clausthal-Zellerfeld (DE); Heide, Gerhard, Dr., 38678 Clausthal-Zellerfeld (DE); Frischat, Günther Heinz, Prof. Dr., 38678 Clausthal-Zellerfeld (DE)

(56) Entgegenhaltungen:
- DATABASE INSPEC [Online] INSTITUTE OF ELECTRICAL ENGINEERS, STEVENAGE, GB; CATHRO K ET AL: "Silica low-reflection coatings for collector covers, by a dip-coating process" Database accession no. 2251283 XP002244628 & SOLAR ENERGY, 1984, USA, Bd. 32, Nr. 5, Seiten 573-579, ISSN: 0038-092X
- PATENT ABSTRACTS OF JAPAN vol. 013, no. 224 (C-599), 24. Mai 1989 (1989-05-24) & JP 01 036770 A (NIPPON SHEET GLASS CO LTD), 7. Februar 1989 (1989-02-07)
- DATABASE WPI Section Ch, Week 199407 Derwent Publications Ltd., London, GB; Class L01, AN 1994-051647 XP002244629 & JP 06 005232 A (TOSHIBA KK), 14. Januar 1994 (1994-01-14)
- D'APUZZO M ET AL: "SOL-GEL SYNTHESIS OF HUMIDITY-SENSITIVE P2O5-SIO2 AMORPHOUS FILMS" JOURNAL OF SOL-GEL SCIENCE AND TECHNOLOGY, KLUWER ACADEMIC PUBLISHERS, DORDRECHT, NL, Bd. 17, Nr. 3, März 2000 (2000-03), Seiten 247-254, XP000947915 ISSN: 0928-0707

## Beschreibung

Die vorliegende Erfindung betrifft einen Glaskörper mit poröser Beschichtung und ein Verfahren zu dessen Herstellung.

EP 0 897 898 A2 beschreibt ein Verfahren zur Abscheidung optischer Schichten auf Flachglasplatten aus Kalk-Natron-Glas mittels eines Soles oder Solgemisches.

In US-A-2601123 wird ein Verfahren zur Herstellung von porösen SiO₂-Schichten auf Glas beschrieben. Dieses Sol-Gel-Beschichtungsverfahren unter Verwendung eines Soles mit hoch dispergierten SiO₂-Teilchen mit einem einfachen Tauchvorgang ermöglicht die Aufbringung von porösen SiO₂ Schichten auf Kalk-Natron-Gläsern.

DE 199 18 811 A1 beschreibt ein Verfahren, bei dem ein vorgespanntes übliches Sicherheitsglas, also ein Kalk-Natron-Glas, mit einer porösen SiO₂-Antireflex-Schicht versehen wird.

Auch DE 196 42 419 A1 und DE 100 18 697 A1 beschreiben Verfahren zur Herstellung von porösen Beschichtungen.

Die typische Zusammensetzung eines Kalk-Natron-Glases ist (in Gew.-% auf Oxidbasis) 72 SiO₂, 14 Na₂O (+ K₂O), 9 CaO, 3-4 MgO, 1 Al₂O₃.

DE 1 941 191 beschreibt ein Verfahren zur Herstellung von transparenten, glasigen, kristallinen oder glasig-kristallinen, anorganischen Mehrkomponentenstoffen, vorzugsweise in dünnen Schichten. Hier sollen vor allem empfindliche, beispielsweise durch Wasser angreifbare Gläser mit den Schichten geschützt werden.

In K. Cathro, D. Constable u. T.Solaga, Solar Energy 32[5] (1984), 573 wird beschrieben, dass poröse SiO₂-Schichten auf Borosilicatglas nur gering haften. Es wird eine Modifizierung des Verfahrens speziell für die Anwendung auf Pyrex^{®} vorgeschlagen, wobei ein Nachbehandlungsschritt durch Tauchen des Glases in eine NaHCO₃-Lösung erforderlich ist. Dadurch wird das Herstellungsverfahren umfangreicher und teurer. Außerdem tritt ein verstärkter Alterungseffekt durch Bildung von Na₂CO₃-Teilchen auf der Beschichtungsoberfläche auf, der zu einer Verringerung der Transmission führt, wie von Helsch, Journal of Non-Crystalline Solids 265 (2000) 193-197, beschrieben ist.

Die geringe Haftung poröser SiO₂-Schichten ist auch bei anderen chemisch beständigen, insbesondere bei alkaliarmen oder alkalifreien Gläsern, beispielsweise bei Kieselglas, ein Problem.

Die Aufgabe der vorliegenden Erfindung liegt darin, einen antireflektierend beschichteten alkaliarmen oder alkalifreien Glaskörper mit erhöhter Haft- und Wischfestigkeit der Schicht auf dem Glas bereitzustellen.

Die Aufgabe der vorliegenden Erfindung wird gelöst durch einen alkalifreien oder alkaliarmen Glaskörper, vorzugsweise einen Borosilicatglaskörper, der mindestens auf einer der Seiten eine poröse Schicht aufweist, die neben SiO₂ Phosphor enthält. Diese Antireflexionsschicht ist auf diesem Körper haft- und wischfest.
Unter alkalifrei oder alkaliarm werden hier Gläser verstanden, die kein Alkalioxid oder weniger als 12 Gew.-% Alkalioxid enthalten.
Ein Maß für die Haft- und Wischfestigkeit der Schicht ist der Abriebtest nach DIN 58196-5. Eine Schicht auf einem Körper, die bei diesem Test das Kriterium 2 (kein Abtrag, nur Abriebspuren erkennbar) oder besser erfüllt, ist sehr abriebfest und damit auch sehr haftfest und sehr wischfest.

In einer bevorzugten Ausgestaltung der Erfindung liegt der Phosphor der Schicht als Phosphoroxidverbindung vor. Mit der Phosphoroxidverbindung werden gute Ergebnisse bei der Abriebfestigkeit erreicht.

Eine bevorzugte Ausgestaltung der Erfindung ist ein Glaskörper, der einen Boroxidanteil im Glas von 1 Gew.-% bis 20 Gew.-%, bevorzugt von wenigstens 3 Gew.-%, ganz besonders bevorzugt von wenigstens 7 Gew.-%, aufweist.

In einer besonders bevorzugten Ausführung enthält der erfindungsgemäße - Glaskörper (in Gew.-% auf Oxidbasis) 70 - 85 SiO₂, 7 - 15 B₂O₃, 2 - < 12, besonders bevorzugt 2 - < 10 Na₂O + K₂O, 1 - 8, besonders bevorzugt 1 - 7 Al₂O₃, 0 - 11 RO, wobei RO eine oder mehrere Komponenten aus der Gruppe MgO, CaO, SrO, BaO, ZnO darstellt.

Eine bevorzugte Ausgestaltung der Erfindung ist ein Glaskörper, der einen Alkalioxidanteil von 0 - < 5 Gew.-%, besonders bevorzugt von 0 - 1 Gew.-%, aufweist.

In einer besonders bevorzugten Ausführung enthält der erfindungsgemäße Glaskörper (in Gew.-% auf Oxidbasis) 40 - 60 SiO₂, 7 - 15 B₂O₃, 8 - 20 Al₂O₃, 0 - 30 RO, wobei RO eine oder mehrere Komponenten aus der Gruppe MgO, CaO, SrO, BaO, ZnO darstellt.

Eine bevorzugte Ausgestaltung der Erfindung ist ein Glaskörper, der einen Siliciumoxidanteil von wenigstens 95 Gew.-% aufweist.
Eine besonders bevorzugte Ausgestaltung der Erfindung ist ein Glaskörper, der einen Siliciumoxidanteil von wenigstens 99 Gew.-% aufweist.
In einer ganz besonders bevorzugten Erfindung besteht der Glaskörper aus Kieselglas.

Eine bevorzugte Ausgestaltung der Erfindung ist ein beschichteter Glaskörper, bei dem der Porendurchmesser der Schicht von 2 nm bis 50 nm beträgt. In diesem Bereich für den Porendurchmesser werden gute Ergebnisse bei der Reflexionsminderung erreicht.

Eine bevorzugte Ausgestaltung der Erfindung ist ein beschichteter Glaskörper, bei dem die Porosität von 10 % bis 60 % des Gesamtvolumens der Schicht beträgt. In diesem Bereich für die Porosität werden gute Ergebnisse bei der Reflexionsminderung erreicht.

Eine bevorzugte Ausgestaltung der Erfindung ist ein beschichteter Glaskörper, bei dem das Gewichtsverhältnis von SiO₂ zu P₂O₅ in der Schicht von 10:1 bis 1:1 beträgt. Mit diesem Verhältnis werden gute Ergebnisse bei der Abriebfestigkeit erreicht.

Eine besonders bevorzugte Ausgestaltung der Erfindung ist ein beschichteter Glaskörper, bei dem das Gewichtsverhältnis von SiO₂ zu P₂O₅ in der Schicht von 3:1 bis 1,2:1 beträgt. Mit diesem Verhältnis werden besonders gute Ergebnisse bei der Abriebfestigkeit erreicht.

Eine bevorzugte Ausgestaltung der Erfindung ist ein beschichteter Glaskörper, bei dem die Dicke der Schicht von 50 nm bis 500 nm beträgt. Mit der Schichtdicke in diesem Bereich werden gute Ergebnisse bei der Reflexionsverminderung erreicht.

Eine besonders bevorzugte Ausgestaltung der Erfindung ist ein beschichteter Glaskörper, bei dem die Dicke der Schicht von 80 nm bis 160 nm beträgt. Mit der Schichtdicke in diesem Bereich werden sehr gute Ergebnisse bei der Reflexionsverminderung erreicht.

Die poröse Schicht des erfindungsgemäßen Glaskörpers kann beispielsweise durch Aufbringen einer Lösung erzeugt werden. Die Lösung kann beispielsweise durch Sprühen, Schleudern oder Tauchen aufgebracht werden.

Erfindungsgemäß ist insbesondere ein Verfahren zur Herstellung eines Glaskörpers vorgesehen, wobei
a) ein Glaskörper in eine H₃PO₄ und SiO₂ enthaltene flüchtige Lösung getaucht wird,
b) der Glaskörper aus der Lösung herausgezogen wird und
c) der Glaskörper bei einer Temperatur von unterhalb von T_{g} des Glases getempert wird.

Mit dem erfindungsgemäßen Verfahren werden beschichtete Gläser, deren Schichten eine hohe Haftfestigkeit, eine hohe Wischfestigkeit und eine hohe Reflexionsminderung aufweisen, hergestellt. Bei dem erfindungsgemäßen Verfahren kann vorteilhafterweise die Beschichtung abriebfest in einer Stufe gemacht werden. Nach dem Tauchen muß der Glaskörper nicht mehr in eine NaHCO₃-Lösung getaucht werden, was nach bisher bekannten Verfahren zum Herstellen von porösen Schichten auf Borosilicatglas erforderlich ist. Das bedeutet einen großen wirtschaftlichen Vorteil für das Verfahren. Das Verfahren wird schneller durchgeführt, da geringere Prozesszeiten bestehen. Es werden Anlagenteile eingespart. Der Rohstoffeinsatz ist verringert. Die Entsorgung einer verbrauchten NaHCO₃-Lösung fällt erfindungsgemäß nicht an.

Das erfindungsgemäße Verfahren ist für alle oben genannten alkalifreien bis alkaliarmen Gläser hervorragend geeignet.

Der Glaskörper kann vor dem Eintauchen in einem oder mehreren Reinigungsschritten vorgereinigt werden. Als Reinigungsmittel können z. B. Wasser, niederkettige Alkohole oder Ketone verwendet werden.

Nach einer bevorzugten Ausgestaltung wird gemäß Verfahrensschritt (b) der Glaskörper mit einer Geschwindigkeit von 0,1 mm/s bis 100 mm/s, bevorzugt mit einer Geschwindigkeit von 1 mm/s bis 20 mm/s aus der Lösung herausgezogen. Höhere Ziehgeschwindigkeiten werden durch Erniedrigung der Viskosität ermöglicht. Die niedrigere Viskosität wird z. B. durch Verringerung des Gehalts an SiO₂ und H₃PO₄ oder Variation des Lösungsmittels erreicht.

Die Lösung, die zur Verwendung in den verschiedenen genannten Herstellungsverfahren und zur Beschichtung der verschiedenen genannten alkalifreien bis alkaliarmen Glaskörper geeignet ist, enthält SiO₂-Sol und H₃PO₄ und eine oder mehrere weitere Säuren, die den pH-Wert der Lösung auf 1 bis 2 einstellen, sowie ein Lösungsmittel. Bevorzugt enthält die Lösung die Säuren HCl oder HNO₃. Bevorzugt enthält die Lösung als Lösungsmittel einen oder mehrere niederkettige Alkohole.

In einer bevorzugten Ausgestaltung der Lösung enthält die Lösung zur Herstellung einer porösen SiO₂- und phosphorhaltigen Schicht 0,1 bis 2 Gew.% HCI oder 0,1 bis 2 Gew.-% HNO₃, 0,1 bis 6 Gew.-% H₃PO₄, 0,5 bis 15 Gew.-% SiO₂-Sol und mindestens einen niederkettigen Alkohol. Mit dieser Lösung werden poröse Schichten erhalten, die abriebfest sind und eine Transmissionserhöhung des Glases erbringen.

Besonders bevorzugt ist eine Lösung zur Herstellung einer porösen SiO₂ und phosphorhaltigen Schicht mit 0,1 bis 2 Gew.% HCI oder 0,1 bis 2 Gew.-% HNO₃, 0,1 bis 3,5 Gew.-% H₃PO₄, 0,5 bis 7 Gew.-% SiO₂-Sol und mindestens einem niederkettigen Alkohol. Mit dieser Lösung werden poröse Schichten erhalten, die besonders abriebfest sind und eine Transmissionserhöhung des Glases erbringen.

Ganz besonders bevorzugt weist der oder die in der Lösung zur Herstellung einer porösen SiO₂ und phosphorhaltigen Schicht als Lösungsmittel dienende niederkettige Alkohole die allgemeine Formel CₙH₂ₙ₊₁OH mit n = 1, 2, 3, 4, 5 auf. Mit dieser Lösung werden poröse Schichten erhalten, die ganz besonders abriebfest sind und eine Transmissionserhöhung des Glases erbringen.

Erfindungsgemäß ist die Verwendung eines Glaskörpers, vorzugsweise eines Borosilicatglaskörpers, als Glasrohr, Glasstab oder Glasscheibe zur Herstellung einer Vorrichtung in der Solarthermie vorgesehen. Die erfindungsgemäß beschichteten Gläser sind für die Verwendung in der Solarthermie, insbesondere in der Brauchwassererwärmung, Prozesswärmeerzeugung und in der Parabolrinnenkraftwerkstechnik, besonders geeignet.

Die Erfindung wird anhand von Beispielen näher erläutert.

### Beispiel

### Herstellung der Lösung:

Es wurde eine Lösung aus 10 g Isopropanol und 0,5 g 1M HNO₃ angesetzt und 12 min. gerührt. Dann wurden 0,8 g 85%ige H₃PO₄ zugegeben und danach 5 min. gerührt. Danach wurden 1,9 g Kieselsol R40 (Chemiewerke Bad Köstritz, SiO₂-Gehalt 40 %) zugegeben und danach 5 min. gerührt. Danach wurde mit Isopropanol auf 28 g aufgefüllt und 5 min. gerührt. Dann wurde die Lösung 1 Tag stehen gelassen. Der pH-Wert der fertigen Lösung betrug 1 - 2.

### Beschichtung:

Ein Glasrohr (DURAN® , Schott Rohrglas GmbH, Zusammensetzung (in Gew.-% auf Oxidbasis): 80 SiO₂, 13 B₂O₃, 2,5 Al₂O₃, 3,5 Na₂O, 1 K₂O) mit einem Außendurchmesser von 100 mm und einer Wanddicke von 2,5 mm wurde in die Lösung vollständig eingetaucht, 10 sek. in der Lösung belassen und anschließend mit einer Geschwindigkeit von 1 mm/s herausgezogen. Dann wurde das Rohr 1 Stunde bei 500 °C getempert.

### Vergleichsbeispiel

Das Vergleichsbeispiel wurde wie das Beispiel durchgeführt mit dem Unterschied, dass der Lösung keine H₃PO₄ zugesetzt wurde. Die Schichten waren daher ohne Phosphat.

### Abriebtest

Für das Beispiel wurde die Abriebfestigkeit nach DIN 58196-5 geprüft. Dabei wurde bei Schärfegrad H 50 das Kriterium 2 erfüllt, da keine Schichten abgetragen wurden.
Die Prüfung der Abriebfestigkeit nach DIN 58196-5 ergab für das Vergleichsbeispiel schon bei Schärfegrad H 25 das Kriterium 5, da die Schichten bis auf das Substrat abgetragen wurden.

Für das Beispiel wurde auch noch der Tape-Test nach DIN 58196-6 durchgeführt. Dabei wurde bei Schärfegrad K2 keine Schichtablösung festgestellt.

Der Vergleich der Schichten von Beispiel und Vergleichsbeispiel zeigt die überraschende und nicht zu erwartende Abriebfestigkeit und damit Haft- und Wischfestigkeit der Schicht, die durch Zugabe von H₃PO₄ erhalten wird.

Damit können nun erstmals alkaliarme und sogar alkalifreie Gläser mit porösen SiO₂-haltigen Schichten beschichtet werden, die neben ihrer antireflektierenden Wirkung haftfest und wischfest sind, d.h. die im Abriebfestigkeitstest nach DIN 58196-5, Schärfegrad H50, das Kriterium 2 oder besser aufweisen, und die im Tape-Test nach DIN 58196-6, Schärfegrad K2, keine Schichtablösung zeigen.
Diese Beschichtungen halten den Anforderungen der genannten Anwendungen, insbesondere den Anforderungen, denen sie beim Einbau der Glaskörper beispielsweise in Halterungen, Dachkonstruktionen u.ä. ausgesetzt sind, stand.

## Patentansprüche

1. Alkalifreier oder -armer Glaskörper, wobei mindestens eine der Seiten eine poröse SiO₂ und Phosphor enthaltende haft- und wischfeste Antireflexionsschicht aufweist und wobei das Glas kein Alkalioxid oder weniger als 12 Gew.-% Alkalioxid enthält.

2. Glaskörper nach Anspruch 1,
**dadurch gekennzeichnet,**
**daß** die Schicht im Abriebfestigkeitstest nach DIN 58196-5, Schärfegrad H 50, das Kriterium 2 oder besser aufweist.

3. Glaskörper nach Anspruch 1 oder 2,
**dadurch gekennzeichnet,**
**daß** er einen Boroxidanteil von wenigstens 1 Gew.-%, bevorzugt von wenigstens 7 Gew.-%, aufweist.

4. Glaskörper nach Anspruch 3,
**dadurch gekennzeichnet,**
**daß** er einen Boroxidanteil von höchstens 20 Gew.-% aufweist.

5. Glaskörper nach wenigstens einem der Ansprüche 1 bis 4,
**dadurch gekennzeichnet,**
**daß** er folgende Komponenten enthält (in Gew.-% auf Oxidbasis):
| | |
|---|---|
| SiO₂ | 70 - 85 |
| B₂O₃ | 7-15 |
| Na₂O + K₂O | 2- < 12 |
| Al₂O₃ | 1-8 |
| RO | 0 -11 |

6. Glaskörper nach wenigstens einem der Ansprüche 1 bis 4,
**dadurch gekennzeichnet,**
**daß** er einen Alkalioxidanteil von 0 - 1 Gew.-% aufweist.

7. Glaskörper nach wenigstens einem der Ansprüche 1 bis 4 oder 6,
**dadurch gekennzeichnet,**
**daß** er folgende Komponenten enthält (in Gew.-% auf Oxidbasis):
| | |
|---|---|
| SiO₂ | 40-60 |
| B₂O₃ | 7-15 |
| Al₂O₃ | 8-20 |
| RO | 0-30 |

8. Glaskörper nach wenigstens einem der Ansprüche 1, bis 3 oder 6,
**dadurch gekennzeichnet,**
**daß** er einen Siliciumoxidanteil von wenigstens 95 Gew.-%, bevorzugt von wenigstens 99 Gew.-%, aufweist.

9. Glaskörper nach wenigstens einem der Ansprüche 1 bis 8,
**dadurch gekennzeichnet;**
**daß** der Phosphor der Schicht als Phosphoroxidverbindung vorliegt.

10. Glaskörper nach wenigstens einem der Ansprüche 1 bis 9,
**dadurch gekennzeichnet,**
**daß** das Gewichtsverhältnis von SiO₂ zu P₂O₅ in der Schicht von 10:1 bis 1:1, bevorzugt von 3:1 bis 1,2:1, beträgt.

11. Glaskörper nach wenigstens einem der Ansprüche 1 bis 10,
**dadurch gekennzeichnet,**
**daß** die Schichtdicke von 50 nm bis 500 nm, bevorzugt von 80 nm bis 160 nm, beträgt.

12. Glaskörper nach wenigstens einem der Ansprüche 1 bis 11,
**dadurch gekennzeichnet,**
**daß** der Porendurchmesser der Schicht von 2 nm bis 50 nm beträgt.

13. Glaskörper nach wenigstens einem der Ansprüche 1 bis 12,
**dadurch gekennzeichnet,**
**daß** die Porosität von 10 % bis 60 % des Gesamtvolumens der Schicht beträgt.

14. Verfahren zur Herstellung eines Glaskörpers nach wenigstens einem der Ansprüche 1 bis 13, wobei die Schicht aufgebracht wird, indem
a) ein Glaskörper in eine H₃PO₄ und SiO₂ enthaltene flüchtige Lösung getaucht wird,
b) der Glaskörper aus der Lösung herausgezogen wird und
c) der Glaskörper bei einer Temperatur von unterhalb von T_{g} des Glases getempert wird.

15. Verfahren nach Anspruch 14,
**dadurch gekennzeichnet,**
**daß** gemäß Verfahrensschritt (b) der Glaskörper mit einer Geschwindigkeit von 0,1 mm/s bis 100 mm/s, bevorzugt mit einer Geschwindigkeit von 1 mm/s bis 20 mm/s aus der Lösung herausgezogen wird.

16. Verwendung eines Glaskörpers nach wenigstens einem der Ansprüche 1 bis 13 als Glasrohr; Glasstab oder Glasscheibe zur Herstellung einer Vorrichtung in der Solarthermie.

## Claims

1. Alkali-free or alkali-poor glass body wherein at least one of the sides has a porous SiO₂- and phosphorus-containing adherent and wipe-resistant anti-reflective coating and wherein the glass contains no alkali metal oxide or less than 12% by weight of alkali metal oxide.

2. Glass body according to Claim 1, **characterized in that** the coating scores to criterion 2 or better in the rubbing test of DIN 58196-5, H 50 sharpness.

3. Glass body according to Claim 1 or 2, **characterized in that** it has a boron oxide content of at least 1% by weight, preferably of at least 7% by weight.

4. Glass body according to Claim 3, **characterized in that** it has a boron oxide content of at most 20% by weight.

5. Glass body according to at least one of Claims 1 to 4, **characterized in that** it contains the following components (in % by weight based on oxide):
| | |
|---|---|
| SiO₂ | 70-85 |
| B₂O₃ | 7-15 |
| Na₂O + K₂O | 2 - < 12 |
| Al₂O₃ | 1-8 |
| RO | 0-11 |

6. Glass body according to at least one of Claims 1 to 4, **characterized in that** it has an alkali metal oxide content of 0-1% by weight.

7. Glass body according to at least one of Claims 1 to 4 or 6, **characterized in that** it contains the following components (in % by weight based on oxide):
| | |
|---|---|
| SiO₂ | 40-60 |
| B₂O₃ | 7-15 |
| Al₂O₃ | 8-20 |
| RO | 0-30 |

8. Glass body according to at least one of Claims 1 to 3 or 6, **characterized in that** it has a silicon oxide content of at least 95% by weight, preferably of at least 99% by weight.

9. Glass body according to at least one of Claims 1 to 8, **characterized in that** the phosphorus in the coating is present as a phosphorus oxide compound.

10. Glass body according to at least one of Claims 1 to 9, **characterized in that** the weight ratio of SiO₂ to P₂O₅ in the layer is from 10:1 to 1:1, preferably from 3:1 to 1.2:1.

11. Glass body according to at least one of Claims 1 to 10, **characterized in that** the coating thickness is from 50 nm to 500 nm, preferably from 80 nm to 160 nm.

12. Glass body according to at least one of Claims 1 to 11, **characterized in that** the pore diameter of the coating is from 2 nm to 50 nm.

13. Glass body according to at least one of Claims 1 to 12, **characterized in that** the porosity is from 10% to 60% of the total volume of the coating.

14. Process for producing a glass body according to at least one of Claims 1 to 13, wherein the coating is applied by
a) dipping a glass body into an H₃PO₄- and SiO₂-containing volatile solution,
b) withdrawing the glass body from the solution, and
c) tempering the glass body at a temperature under Tg of the glass.

15. Process according to Claim 14, **characterized in that** in process step (b) the glass body is withdrawn from the solution at a speed of from 0.1 mm/s to 100 mm/s, preferably at a speed of from 1 mm/s to 20 mm/s.

16. Use of a glass body according to at least one of Claims 1 to 13 as glass tubing, glass rod or glass pane in the manufacture of solar energy apparatus.

## Revendications

1. Corps en verre exempt ou pauvre en métaux alcalins, dans lequel au moins un des côtés présente une couche poreuse antiréfléchissante, adhérente, résistant au frottement et contenant SiO₂ et du phosphore, le verre ne contenant pas d'oxyde de métal alcalin ou moins de 12 % en poids d'oxyde de métal alcalin.

2. Corps en verre selon la revendication 1, **caractérisé en ce que** dans le test de tenue au frottement selon DIN 58196-5, degré de sévérité H 50, la couche obtient la cote 2 ou mieux.

3. Corps en verre selon les revendications 1 ou 2, **caractérisé en ce qu'**il présente une teneur en oxyde de bore d'au moins 1% en poids et de préférence d'au moins 7 % en poids.

4. Corps en verre selon la revendication 3, **caractérisé en ce qu'**il présente une teneur en oxyde de bore supérieure à 20 % en poids.

5. Corps en verre selon au moins l'une des revendications 1 à 4, **caractérisé en ce qu'**il contient les composants suivants (en % en poids d'oxyde) :
| | |
|---|---|
| SiO₂ | 70 à 85 |
| B₂O₃ | 7 à 15 |
| Na₂O + K₂O | 2 à < 12 |
| Al₂O₃ | 1 à 8 |
| RO | 0 à 11 |

6. Corps en verre selon au moins l'une des revendications 1 à 4, **caractérisé en ce qu'**il présente une teneur en oxyde de métal alcalin de 0 à 1 % en poids.

7. Corps en verre selon au moins l'une des revendications 1 à 4 ou 6, **caractérisé en ce qu'**il contient les composants suivant (en % en poids d'oxyde) :
| | |
|---|---|
| SiO₂ | 40 à 60 |
| B₂O₃ | 7 à 15 |
| Al₂O₃ | 8 à 20 |
| RO | 0 à 30 |

8. Corps en verre selon au moins l'une des revendications 1 à 3 ou 6, **caractérisé en ce qu'**il présente une teneur en oxyde de silicium d'au moins 95 % en poids et de préférence d'au moins 99 % en poids.

9. Corps en verre selon au moins l'une des revendications 1 à 8, **caractérisé en ce que** le phosphore de la couche présente la forme d'un composé d'oxyde de phosphore.

10. Corps en verre selon au moins l'une des revendications 1 à 9, **caractérisé en ce que** le rapport pondéral entre SiO₂ et P₂O₅ dans la couche est compris entre 10 : 1 et 1 : 1 et de préférence entre 3 : 1 et 1,2 : 1.

11. Corps en verre selon au moins l'une des revendications 1 à 10, **caractérisé en ce que** l'épaisseur de la couche est comprise entre 50 nm et 500 nm et de préférence entre 80 nm et 160 nm.

12. Corps en verre selon au moins l'une des revendications 1 à 11, **caractérisé en ce que** le diamètre des pores de la couche est compris entre 2 nm et 50 nm.

13. Corps en verre selon au moins l'une des revendications 1 à 12, **caractérisé en ce que** la porosité représente de 10 % à 60 % du volume total de la couche.

14. Procédé de fabrication d'un corps en verre selon au moins l'une des revendications 1 à 13, dans lequel la couche est appliquée :
a) en immergeant un corps en verre dans une solution volatile qui contient H₃PO₄ et SiO₂,
b) en extrayant le corps en verre de la solution et
c) en chauffant le corps en verre à une température inférieure au Tg du verre.

15. Procédé selon la revendication 14, **caractérisé en ce que** dans l'étape de traitement (b), le corps en verre est extrait de la solution à une vitesse comprise entre 0,1 mm/s et 100 mm/s et de préférence à une vitesse comprise entre 1 mm/s et 20 mm/s.

16. Utilisation d'un corps en verre selon au moins l'une des revendications 1 à 13 comme tube en verre, tige en verre ou plaque de verre pour la fabrication d'un dispositif solaire thermique.
